Europäisches Patentamt

European Patent Office

Office européen des brevets

(19)

(11) **EP 0 647 829 B1**

(12) **FASCICULE DE BREVET EUROPEEN**

(45) Date de publication et mention
de la délivrance du brevet:
**19.11.1997 Bulletin 1997/47**

(51) Int Cl.⁶: **G01B 21/26**, G01B 11/275,
G01B 7/315, G01B 5/255

(21) Numéro de dépôt: **94402152.6**

(22) Date de dépôt: **28.09.1994**

(54) **Dispositif et procédé pour le contrôle géométrique de véhicule**

Verfahren und Vorrichtung zur geometrischen Kontrolle eines Fahrzeugs

Process and device for the geometrical control of a vehicle

(84) Etats contractants désignés:
**DE ES GB IT**

(30) Priorité: **11.10.1993 FR 9312059**
**20.10.1993 FR 9312526**

(43) Date de publication de la demande:
**12.04.1995 Bulletin 1995/15**

(73) Titulaire: **MULLER BEM**
**F-28000 Chartres (FR)**

(72) Inventeurs:
• **Douine, Denis**
**F-77400 Lagny Sur Marne (FR)**
• **Galland, Michel**
**F-28000 Chartres (FR)**
• **Perchat, Alain**
**F-93160 Noisy-Le-Grand (FR)**
• **Rouchaville, René**
**F-77360 Vaires-Sur-Marne (FR)**

(74) Mandataire: **Boutin, Antoine**
**Cabinet Tony-Durand,**
**78, avenue Raymond Poincaré**
**75116 Paris (FR)**

(56) Documents cités:
EP-A- 0 460 470       EP-A- 0 521 254
FR-A- 2 176 837       US-A- 3 865 492
US-A- 4 718 759       US-A- 5 168 632

## Description

L'invention est relative a un dispositif de contrôle géométrique de véhicule, ainsi qu'un procédé d'utilisation de ce dispositif.

On connaît de nombreux appareils de contrôle géométrique pour l'alignement des roues des véhicules, notamment ceux décrits par les documents US 3 865 492, US 3 901 604, US 4 319 838, US 4 594 789, US 4 854 702 et US 5 018 853.

Dans ces appareils connus, une source de rayonnement lumineux solidarisée à une roue du véhicule contrôlé éclaire un capteur solidaire d'une autre roue du véhicule, qui fournit un signal traité par un dispositif de traitement et d'exploitation des signaux pour fournir des valeurs angulaires recherchées.

La disposition habituelle des appareils de contrôle géométrique des véhicules automobiles est décrite notamment par le document US 4 311 386 : un ensemble de six boîtiers de mesure est fixé aux roues avant et arrière du véhicule contrôlé ; un boîtier à chaque roue arrière et un ensemble de deux boîtiers rigidement liés entre eux à chaque roue avant. Chaque boîtier comporte une source de rayonnement et un capteur sensible au rayonnement émis par la source, de manière que la source de rayonnement d'un premier boîtier rayonne vers le capteur d'un deuxième boîtier et que la source de rayonnement de ce deuxième boîtier rayonne vers le capteur de ce premier boîtier.

Le document US 4 311 386 décrit, en effet, un procédé pour contrôler le parallélisme des roues des trains avant et arrière des véhicules automobiles et un appareil pour la mise en oeuvre de ce procédé. A cet effet, on dispose au niveau de chaque roue avant un émetteur de rayon laser, on projette depuis l'émetteur associé à chaque roue avant un rayon laser transversalement devant le véhicule en direction de l'autre roue avant, ledit rayon venant frapper un récepteur, on projette depuis le même émetteur associé à l'une des roues avant un troisième rayon laser vers un miroir réfléchissant placé au niveau de la roue arrière correspondante et on reçoit le troisième rayon laser réfléchi sur un troisième récepteur associé à la même roue avant, puis sur chaque récepteur associé à un émetteur laser, on relève la distance entre le point d'impact du rayon laser et un zéro de référence. Le récepteur associé à chacun des rayons laser projetés à partir de l'émetteur d'une roue avant transversalement devant le véhicule est disposé en avant de l'autre roue avant. On projette également, depuis l'émetteur de l'autre roue avant, un quatrième rayon laser vers un second miroir réfléchissant placé au niveau de la roue arrière correspondante et on reçoit le quatrième rayon laser réfléchi sur un quatrième récepteur associé à la même autre roue avant et on relève la distance entre le point d'impact dudit rayon laser et un zéro de référence. On introduit les distances relevées sur les quatre récepteurs dans un calculateur électronique qui fournit l'ensemble des caractéristiques géométriques du véhicule, connaissant la voie et l'empattement du véhicule.

Toutefois, dans ce procédé et ce dispositif perfectionnés, il faut également réaliser le dévoilage d'une roue, par exemple d'une roue avant. A cet effet, on lève le véhicule et on fait tourner la roue avant dans le sens de marche-avant du véhicule, de manière à déterminer la courbe de voile de la roue. On continue de tourner la roue jusqu'à ce que cette roue soit dans la position correspondant au voile moyen, puis on repose le véhicule sur le sol en maintenant la roue dans cette position, ce qui théoriquement évite d'influencer le parallélisme lorsque la roue se trouve dans une position dans laquelle le voile moyen est horizontal et le voile maximum est vertical. On opère de façon analogue pour exécuter le dévoilage d'une roue arrière.

On constate cependant, lorsque l'on repose la voiture sur ses roues que l'action des dispositifs de suspension, en particulier l'action du bras de suspension sur la roue avant, entraîne une rotation non désirée de la roue d'un angle de l'ordre de 10° entre le début de contact du pneumatique avec le sol et la pose complète de la roue sur le sol. Il en résulte une imperfection des mesures, en raison du fait que les roues reposant sur le sol se trouvent dans des positions angulaires non désirées, correspondant à une valeur de voile différente du voile moyen.

Un but de l'invention est de perfectionner le contrôle géométrique des véhicules, en fournissant en permanence la valeur réelle de l'angle de roue, de manière à effectuer une correction des mesures en fonction du voile réel de la roue. On entend par voile de façon générale une courbe ou un signal sinusoïdal variant en fonction de la position angulaire de la roue et représentatif des déformations transversales de la jante ou de la roue.

Le document DE-4 121 655 décrit un appareil de mesure de la position angulaire de la roue, permettant d'accéder à la valeur du voile de la roue. Grâce à cet appareil, il est possible de connaître la position réelle de la roue, afin de pouvoir compenser les mesures géométriques par une correction dépendant de la phase du voile. Pour connaître la position angulaire de la roue, on prévoit de monter sur un axe solidaire d'un support fixé rigidement à la roue une roue dentée, qui entraîne un pignon accouplé à un convertisseur de mesure fournissant un signal électrique représentatif de la position angulaire de la roue. L'axe de la roue dentée est disposé coaxialement à l'axe de la roue, ce qui entraîne une erreur de mesure correspondant au jeu relatif entre ledit pignon et ladite roue dentée.

Un deuxième but de l'invention est de perfectionner la mesure de la position angulaire de la roue au moyen d'un dispositif intégrant simultanément les moyens de mesure classiques des valeurs de parallélisme connues et d'effectuer les corrections correspondantes en fonction du voile de chaque roue du véhicule, en particulier en corrigeant les valeurs de parallélisme obtenues au moyen d'appareils à sources de rayonnement lumineux particuliers présentant une résolution et une étendue de mesure améliorées, de conception simple et de fabrication économique, n'utilisant en particulier que des capteurs optiques économiques de type linéaire.

Un troisième but de l'invention est de prévoir un positionnement invariable du dispositif par rapport au support solidaire de la jante de roue et d'éviter toute erreur entraînée par des erreurs de positionnement résultant de montages et de démontages successifs du dispositif par rapport à la jante.

L'invention a pour objet un dispositif pour le contrôle géométrique de véhicule, du type comportant un boîtier avec un axe prisonnier dépassant du boîtier, ledit axe monté à rotation dans le boîtier s'engageant par son extrémité dépassante dans et étant fixé à un élément de support solidaire d'une roue du véhicule à contrôler, ledit boîtier contenant un boîtier de mesure d'orientation de la roue dans le plan horizontal dit "bloc caméra", un potentiomètre de suivi de l'angle de roue, des moyens de mesure d'inclinaisons dans un plan vertical parallèle à la roue et dans un plan vertical perpendiculaire à la roue montés ou connectés sur une carte électronique ; ledit bloc caméra, ledit potentiomètre et lesdits moyens montés ou connectés sur une carte électronique émettant des signaux électriques représentatifs d'indications corrélées avec des paramètres physiques à détecter en vue du contrôle géométrique d'un véhicule.

Selon une ou plusieurs autres caractéristiques de l'invention :

- le dispositif comporte un axe portant deux conformations parallèles et espacées, dont la première vient en appui à un emplacement de référence de l'élément de support et dont la deuxième vient en appui à un emplacement de référence du boîtier, de manière à fournir un montage reproductible et invariable du boîtier sur le support par l'intermédiaire de l'axe après blocage relatif entre le boîtier, l'axe et le support ;

- le dispositif comporte une carte électronique de traitement et de calcul de signaux en provenance de moyens de mesure de la position angulaire de la roue, de mesure d'inclinaisons dans un plan vertical parallèle à la roue et dans un plan vertical perpendiculaire à la roue et de mesure d'orientation de la roue dans le plan horizontal, ainsi qu'un panneau d'affichage conversationnel apte à guider l'opérateur selon les instructions émises par ladite carte électronique de traitement et de calcul ;

- le boîtier de mesure d'orientation de la roue dans le plan horizontal comporte au moins une fente transparente au rayonnement lumineux provenant d'une source externe et au moins un détecteur optique linéaire disposé en aval de la fente dans le sens incident du rayonnement lumineux pour détecter l'image de la source formée par la fente, le détecteur étant incliné suivant un angle aigu avec le plan passant par l'axe longitudinal de la fente et l'axe longitudinal de l'image de la source sur le détecteur ;

- ledit angle aigu est de préférence compris entre 30 et 60 degrés d'angle,

- le détecteur est situé dans un plan parallèle au plan de la fente et fait avec la direction perpendiculaire à un axe longitudinal de la fente un angle aigu, ou le détecteur est situé dans un plan qui fait un angle aigu avec l'axe optique du faisceau incident,

- le dispositif comporte au moins un miroir de repli du faisceau incident, de manière à minimiser le volume et les dimensions du boîtier,

- le dispositif comporte au moins un boîtier qui comporte plusieurs fentes, ou organes de définition d'image,

- le boîtier comporte au moins un prisme de déviation du faisceau lumineux, de manière à minimiser l'écartement entre fentes,

- la fente est en forme de croix comportant deux fentes perpendiculaires, ou organes de définition d'image perpendiculaires,

- la croix supporte au voisinage de l'axe optique un fil ou un réticule apte à se projeter sur une barrette du détecteur optique linéaire,

- une fente, au moins, est remplacée par un fil ou un peigne opaque, de manière à définir une image inverse sur le capteur optique linéaire,

- le boîtier porte une source de rayonnement lumineux qui est une lampe du type tube à gaz produisant des éclairs lumineux entre deux électrodes,

- dans le cas d'un dispositif comportant plusieurs fentes, la largeur d'une fente donnée est différente de la largeur d'une autre fente,

- une fente est une fente dynamique.

- le moyen de mesure de la position angulaire de la roue est monté directement coaxialement audit axe dépassant du boîtier ;

- le moyen de mesure de la position angulaire de la roue comporte une zone angulaire morte ;

- l'axe dépassant du boîtier porte un moyen d'indexation du côté de l'extrémité s'engageant dans l'élément de support, de manière à monter l'axe et le boîtier maintenu horizontal dans une position angulaire préréglée ;

- le moyen de mesure de la position angulaire de la roue est un capteur potentiométrique ;

- le capteur potentiométrique est du type à piste sérigraphiée ;

- les moyens de mesure d'inclinaisons dans les plans verticaux respectivement parallèle et perpendiculaire à la roue comportent un inclinomètre du type à goutte de liquide conducteur ;

- le dispositif comporte en outre un moyen de mesure d'inclinaison dans un plan vertical parallèle à la roue ;

L'invention a également pour objet un procédé de mise en oeuvre d'un dispositif selon l'invention, caractérisé en ce que le procédé est du type conversationnel entre un opérateur et un écran d'affichage recevant ses indications d'une carte de traitement et de calcul comportant des mémoires et des microprocesseurs programmables

Selon une ou plusieurs autres caractéristiques de l'invention :

a/ l'écran d'affichage indique à l'opérateur de mettre le support de roue vertical, de fixer rigidement le boîtier maintenu horizontal sur l'axe, de déclencher les mesures au moyen des capteurs précités et de mémoriser ces mesures dans des mémoires prévues à cet effet sur la carte électronique de traitement et de calcul ;

b/ l'écran d'affichage indique à l'opérateur de desserrer le bouton moleté pour permettre une rotation relative entre l'axe et le boîtier, de tourner la roue dans un sens prédéterminé, par exemple à gauche, de déclencher les mesures par les capteurs précités et de mémoriser ces mesures dans les mémoires précitées de la carte électronique ;

c/ l'écran d'affichage indique à l'opérateur de tourner la roue dans un autre sens prédéterminé, par exemple à droite, de déclencher les mesures et de mémoriser ces mesures dans la carte électronique.

- l'opérateur tourne la roue d'une étape (a/, ou b/) à l'étape suivante (b/, ou c/) avec une précision angulaire de l'ordre de 30 degrés angulaires sexagésimaux.
- la roue du véhicule est entraînée en rotation par un moyen motorisé, du type tapis roulant ou rouleau d'entraînement motorisé.
- le véhicule à contrôler est équipé de dispositifs selon l'invention, puis circule de manière à effectuer le dévoilage et les corrections des valeurs géométriques pendant le roulage du véhicule.
- on ne déclenche pas les mesures à l'étape a/ et l'on tourne la roue du véhicule d'un angle choisi avant de déclencher les mesures ;
- les informations correspondant à l'inclinaison dans un plan vertical parallèle à la roue sont utilisées pour compenser les mesures en fonction de l'écart de la position du boîtier par rapport à l'horizontale.
- l'écran d'affichage est remplacé par un dispositif d'affichage extérieur au boîtier et en communication avec la boîtier par l'intermédiaire d'un bloc de connection.
- les moyens conversationnels et de traitement donnent des indications en temps réel d'inclinaison du boîtier dans le plan parallèle à la roue.

L'invention sera mieux comprise grâce à la description qui va suivre donnée à titre d'exemple non limitatif en référence aux dessins annexés dans lesquels :

La Figure 1 représente schématiquement une vue en perspective avec arrachement partiel d'un dispositif selon l'invention.

La Figure 2 représente schématiquement une vue en coupe transversale d'un dispositif selon l'invention.

La Figure 3 représente schématiquement une vue en coupe transversale partielle agrandie d'un dispositif selon l'invention.

La Figure 4 représente schématiquement une vue partielle d'un système de mesure de l'angle de roue conforme à l'invention.

La figure 5 représente schématiquement en perspective une réalisation préférée d'un boîtier de mesure d'orientation de la roue dans le plan horizontal selon l'invention.

La figure 6 représente schématiquement et partiellement un premier mode de réalisation du boîtier de mesure d'orientation de la roue dans le plan horizontal selon l'invention.

La figure 7 représente schématiquement et partiellement un deuxième mode de réalisation du boîtier de mesure d'orientation de la roue dans le plan horizontal selon l'invention.

La figure 8 représente schématiquement et partiellement un troisième mode de réalisation du boîtier de mesure d'orientation de la roue dans le plan horizontal selon l'invention.

La figure 9 représente schématiquement et partiellement un quatrième mode de réalisation du boîtier de mesure d'orientation de la roue dans le plan horizontal selon l'invention.

La figure 10 représente schématiquement et partiellement un cinquième mode de réalisation du boîtier de mesure d'orientation de la roue dans le plan horizontal selon l'invention.

La figure 11 représente schématiquement une application du boîtier de mesure d'orientation de la roue dans le plan horizontal selon l'invention à la mesure des distances par triangulation.

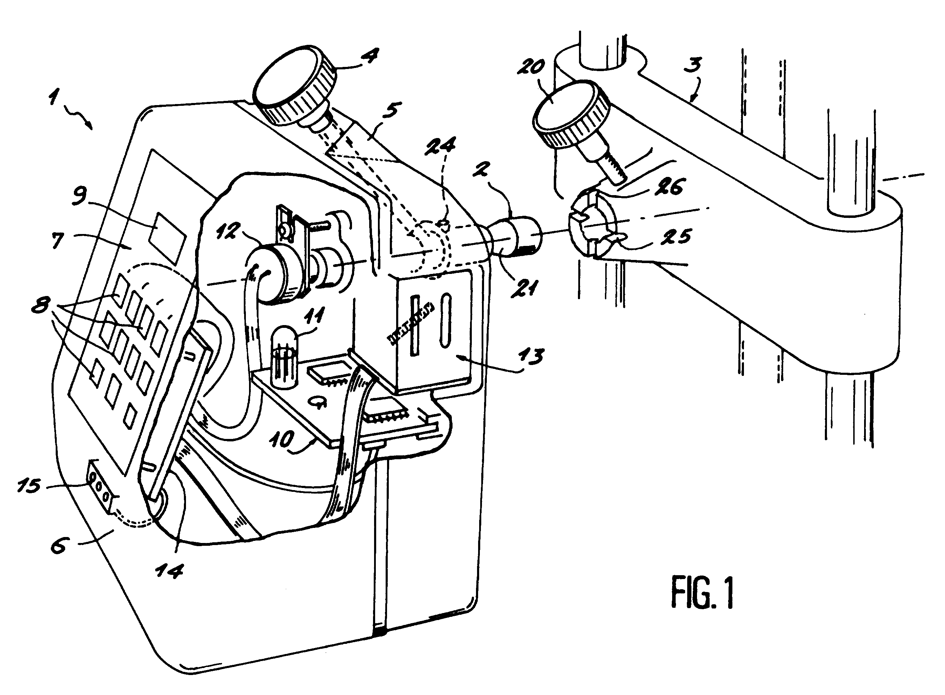

En référence à la figure 1, un dispositif selon l'invention se présente sous la forme d'un boîtier 1 comportant un axe 2 dépassant apte à coopérer avec une pièce centrale 3 d'un support non représenté en totalité fixé sur une roue de véhicule par accrochage sur les bords de jante de la roue en extension ou en compression suivant le type de jante. Le support comportant l'élément 3 peut également être maintenu et positionné sur la jante de la roue par d'autres moyens assurant un maintien ferme sur la jante de la roue.

L'axe 2 est monté prisonnier sur le boîtier 1 avec une liberté de rotation, ce qui permet de tourner l'axe 2 sur lui-même, mais non de le retirer du boîtier.

Le boîtier 1 comporte une vis de serrage 4 munie d'un bouton moleté et coopérant avec un taraudage réalisé dans le corps 5 du boîtier moulé en alliage léger. Le corps 5 est fermé par un couvercle 6 en face avant, portant un panneau d'affichage 7 muni de touches 8 et d'un écran 9 permettant l'introduction d'ordres spécifiques selon un mode conversationnel. De préférence, la séquence d'interventions à programmer apparaît sur l'écran 9 et demande à l'opérateur d'appuyer sur les touches 8 correspondant aux étapes du procédé de contrôle.

Le boîtier 1 contient : une carte électronique 10 sur laquelle est connecté ou monté un inclinomètre biaxe 11 du type à liquide conducteur permettant de mesurer des inclinaisons dans un plan vertical parallèle à la roue et dans un plan vertical perpendiculaire à la roue ; un potentiomètre 12 de suivi de l'angle de roue ; et un bloc caméra 13 comportant une source lumineuse de forte puissance, de préférence du type tube à décharge et un capteur par exemple du type CCD (charge coupled device) ou DTC (dispositif à transfert de charge) apte à mesurer les orientations des roues dans le plan horizontal. Les sorties de tous ces capteurs sont reliées à une carte électronique 14 de traitement et de calcul comportant un ou plusieurs micro-processeurs programmables de manière connue : cette carte 14 est reliée au panneau d'affichage 7 et à un bloc de sortie et de connexion 15 permettant l'enfichage de prises adaptées, directement en-dessous du panneau d'affichage 7, sur la face avant du couvercle 6 du boîtier 1. Ainsi, les sorties du capteur potentiométrique 12 permettent de connaître exactement la valeur du voile de la roue en fonction de la position angulaire de la roue, tandis que les inclinaisons dans deux plans verticaux sont connues grâce à l'inclinomètre 11 et à sa carte de traitement 10 et tandis que les orientations dans le plan horizontal sont connues grâce à un boîtier ou bloc caméra 13 qui illumine un bloc caméra 13 d'un autre dispositif fixé sur une autre roue du véhicule et reçoit de cet autre dispositif un éclairement lumineux qui est détecté par le capteur CCD de bloc caméra 13. Dans un mode de réalisation préféré de l'invention, l'inclinomètre bi-axe 11 du type à liquide conducteur est avantageusement un inclinomètre de référence SP-5000-23013 fabriqué et vendu par la société de droit américain SPECTRON SYSTEMS TECHNOLOGY INC., et le potentiomètre 12 est avantageusement un potentiomètre de référence 66395 commercialisé par la société de droit français BOURNS-OHMICS SA.

La présente invention s'applique à toute source de rayonnement non focalisé et tout boîtier comportant tout capteur sensible à une telle source de rayonnement. A titre de mode de réalisation préféré, on choisit une source de rayonnement infra-rouge et un capteur linéaire du type CCD ("Charge Coupled Device" ou "cellule à diodes à couplage de charges"). La source de rayonnement infrarouge est réalisée par exemple sous forme d'un ensemble comportant une lampe "flash" produisant des éclairs d' une durée de 500 microsecondes, avec une puissance instantanée de 1000W et des intervalles d'obscurité de 300 millisecondes correspondant alternativement à la mesure sur l'un ou l'autre boîtier.

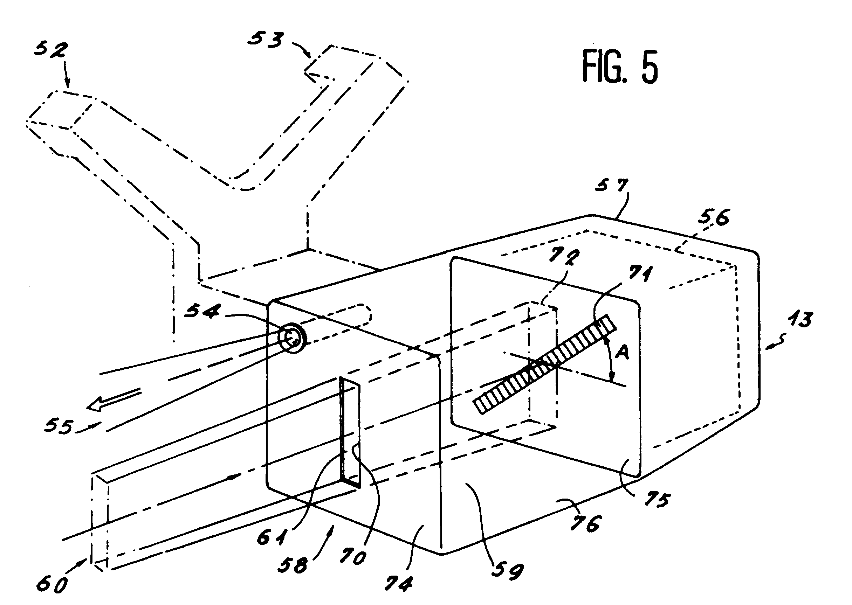

Le capteur CCD est par exemple un capteur linéaire à 2048 points ou pixels, notamment du type commercialisé par la Société de droit américain FAIRCHILD ou par la Société de droit japonais SONY. Un mode préféré de réalisation de bloc caméra ou boîtier de mesure est décrit en référence aux figures 5 à 11.

De manière connue, on dispose généralement un ensemble de quatre boîtiers pour un véhicule comprenant quatre roues, les boîtiers avant portant en outre à l'extrémité avant un bras rigide solidaire du corps 5, bras portant à son extrémité un bloc caméra 13 destiné à éclairer transversalement un autre bloc caméra 13 qui lui fait face. Pour un véhicule à deux roues avant et deux roues arrière, l'ensemble du système de contrôle géométrique comprend par conséquent six blocs caméra 13 (quatre sur les roues avant et 2 sur les roues arrière), quatre inclinomètres 11 et cartes associées 10 à raison d'un exemplaire par roue, quatre capteurs potentiométriques 12 à raison d'un exemplaire par roue et quatre cartes 14 de traitement et de calcul, quatre panneaux d'affichage 7 et quatre blocs de connexion 15 à raison également d'un exemplaire par roue. Cette disposition est analogue à la disposition générale représentée en figure 1 du document US 4 311 386.

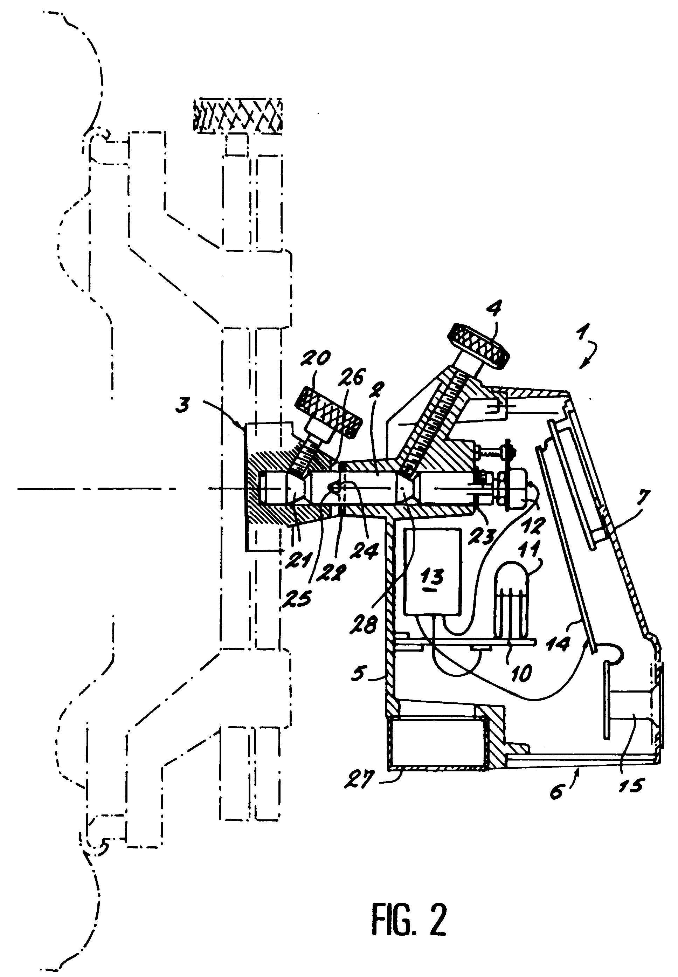

En référence à la figure 2, les éléments de repères identiques décrivent des éléments similaires ou identiques aux éléments de la figure 1.

Le montage de l'axe 2 dans l'élément 3 de support à griffes s'effectue par insertion de l'axe 2 dans un alésage correspondant du support 3 et par serrage d'une vis 20 à bouton moleté apte à bloquer l'axe 2 par appui sur une rampe conique 21 réalisée sur l'axe 2. De cette manière, l'axe 2 est maintenu solidaire et fixe relativement au support 3 d'accrochage sur la roue du véhicule. Le boîtier 1 est monté sur l'axe 2 par l'intermédiaire de deux anneaux élastiques 22 et 23 appelés généralement "circlips" par les mécaniciens. Cette disposition mécanique prévoyant l'engagement du boîtier 1 sur l'axe 2 le long d'un alésage du boîtier 1 recevant l'axe 2 sur une longueur supérieure à quatre fois le diamètre de l'axe 2 assure ainsi un positionnement géométrique précis du boîtier 1 par rapport à l'axe 2 et au support 3 dont l'axe 2 est solidaire, donc par rapport à la roue du véhicule sur laquelle est monté le support 3. Egalement, le blocage en position au moyen de deux anneaux élastiques assure un positionnement transversal du boîtier 1 sur l'axe 2, ce qui assure un montage invariable du boîtier 1 par rapport au support 3 avec une liberté de rotation du boîtier 1 autour de l'axe 2. Ainsi, les boîtiers 1 équipant les quatre roues d'un véhicule se trouvent à une distance fixe prédéterminée de chaque roue, ce qui n'influence pas les mesures des orientations respectives de chaque roue dans le plan horizontal.

De manière analogue à la fixation de l'axe 2 sur le support 3 au moyen de la vis 20 à bouton moleté coopérant avec la rampe conique 21, le boîtier 1 est fixé relativement à l'axe 2 au moyen de la vis à bouton moleté 4 coopérant avec une deuxième rampe conique 28 usinée sur l'axe 2.

Selon une disposition avantageuse de l'invention, on prévoit d'usiner en regard de l'anneau élastique 22 positionné dans une première gorge de l'axe 2 : une première face d'appui plane de référence en bout du support 3 et d'usiner en regard de l'anneau élastique 23 positionné dans une deuxième gorge de l'axe 2 parallèle à ladite première gorge : une deuxième face d'appui plane de référence sur le corps 5 du dispositif 1.

Ainsi, lorsque l'on bloque l'axe 2 dans le support 3 par serrage de la vis 20 à bouton moleté, l'anneau élastique 22 vient en contact géométrique avec ladite première face d'appui et lorsque l'on bloque le boîtier 1 sur l'axe 2 par serrage de la vis 4 à bouton moleté, l'anneau élastique 23 vient en contact géométrique avec ladite deuxième face d'appui : il en résulte ainsi que les première et deuxième faces d'appui sont positionnées exactement l'une par rapport à l'autre, ce positionnement étant invariable malgré tout démontage et remontage intermédiaire. L'invention fournit par conséquent un montage reproductible sans jeu, n'entraînant aucune variation de mesure alors que les systèmes équivalents de l'art antérieur étaient sujets à des erreurs de positionnement de l'ordre de 2' à 3' (deux ou trois minutes angulaires sexagésimales).

Avantageusement, on prévoit de munir l'axe 2 d'une goupille ou d'un axe traversant 24 apte à coopérer avec une fente de positionnement 25 du support 3 pour indexer l'axe 2 en position lors du montage du boîtier 1 et de l'axe 2 sur l'élément de support 3. De préférence, on prévoit deux fentes 25, 26 assurant une indexation à 90° près de l'axe 2 sur le support 3.

Le boîtier 1 comporte également un moyen de fixation en position inférieure d'un bras 27 apte à porter un bloc caméra 13 à une distance prédéterminée du boîtier 1, ce bloc caméra 13 étant relié également à la carte électronique de traitement et de calcul 14 pour déterminer les valeurs géométriques relatives aux roues directrices et effectuer les corrections nécessaires des autres valeurs fournies par les autres capteurs de mesure.

L'inclinomètre 11 et la carte électronique 10 mesurent en permanence l'inclinaison du boîtier 1 (et du bras 27 dans le cas d'un boîtier 1 de roue avant), et transmettent les informations correspondantes à l'écran d'affichage 9 après traitement par la carte 14 de traitement et de calcul qui contient un programme de génération d'une indication représentative de l'inclinaison précitée. Cette indication est affichée sous forme d'une mesure angulaire ou sous forme schématisée d'un niveau à bulle avec un repère lumineux se déplaçant en fonction de l'inclinaison horizontale du boîtier : l'opérateur est ainsi directement informé en temps réel de l'inclinaison précitée par l'image "activée" par l'inclinaison réelle du boîtier et n'a plus besoin d'observer les niveaux à bulle coûteux de l'art antérieur que l'on peut ainsi supprimer.

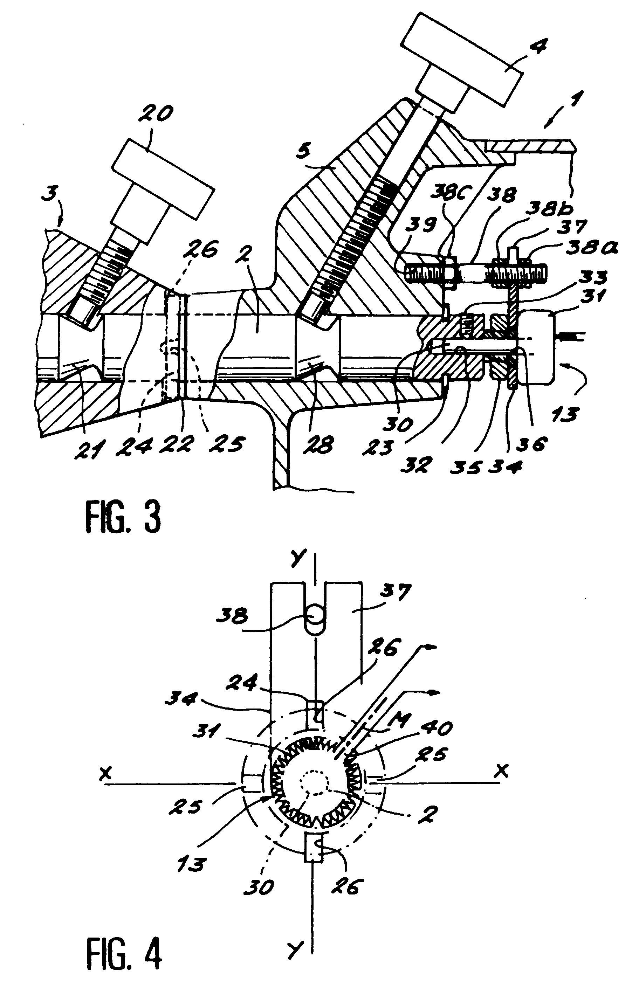

En référence à la figure 3, les éléments de référence identiques à la figure 2 décrivent des éléments similaires ou identiques à ceux de la figure 2.

Le capteur de mesure angulaire 12 est un capteur du type potentiomètre, dont la résistance varie en fonction de l'orientation angulaire de l'axe 30 du capteur relativement au corps 31 du capteur. Le capteur 12 de mesure de la position angulaire des roues est monté sensiblement coaxialement à l'axe 2 par insertion de sa tige de commande 30 dans un alésage 32 pratiqué dans l'axe 2, une vis 33 étant prévue pour bloquer en rotation l'axe 30 du potentiomètre à l'intérieur de l'alésage 32 de l'axe 2 lorsque la position de réglage désirée est atteinte. Le corps 31 du potentiomètre est serré rigidement sur une plaquette 34 au moyen d'un écrou 35, de manière à solidariser rigidement le corps 31 à la plaquette 34. A cet effet, la plaquette 34 est de préférence percée d'un orifice 36 de diamètre approprié, tandis qu'à l'extrémité de la plaquette opposée à l'orifice 36 on prévoit un usinage en forme de fourche destiné à empêcher la rotation du corps du potentiomètre lorsque l'axe 2 et l'axe 30 du potentiomètre sont entraînés en rotation par le mouvement de rotation de la roue à laquelle ils sont reliés rigidement. L'extrémité 37 en forme de fourche coopère avec un moyen de fixation 38 rigidement lié au boîtier 1 : le moyen de fixation 38 est de préférence une simple vis 38a munie d'un premier écrou 38b coopérant avec la tête de la vis 38a pour bloquer rigidement en position la fourche de l'extrémité 37 et d'un deuxième contre écrou 38c empêchant la vis 38a de se desserrer du taraudage 39 réalisé dans le corps 5 du boîtier 1 dans lequel la vis 38a est visée.

L'invention fournit ainsi un moyen simple de mesure de la position angulaire des roues, ne présentant pratiquement aucun jeu mécanique et fournissant un positionnement parfait par rapport à l'axe 2 de liaison de la jante au boîtier 1 de mesure, en supprimant tous les jeux résultant des montages à engrenages et roulements à billes de l'art antérieur. Ceci permet d'envisager comme capteur de mesure 12 un capteur potentiométrique de faible coût du type à piste sérigraphiée avec une sortie électrique directe, bien que ces capteurs potentiométriques connus présentent généralement l'inconvénient de présenter une zone morte ne fournissant aucune mesure dans un secteur angulaire prédéterminé.

En référence à la figure 4, les éléments de repère identiques à la figure 3 désignent des éléments similaires ou identiques à ceux de la figure 3.

On a repéré par les axes X-X et Y-Y les directions correspondant à l'indexation de la goupille 24 de l'axe 2 sur les fentes 25 et 26 correspondantes de l'élément 3 de support solidaire de la jante. Lors du montage du capteur potentiométrique 12 sur l'axe 2, on prévoit de disposer avant fixation au moyen de la plaquette 34 et de la vis 33 montées sur l'axe 2, le corps 31 du potentiomètre 12 par rapport à l'axe 30 du potentiomètre 12 de manière que la zone angulaire morte correspondant à un emplacement vide de pistes sérigraphiées 40 se situe sensiblement symétriquement par rapport à un axe M faisant un angle d'environ 45° avec l'axe X-X ou faisant un angle d'environ 45° avec l'axe Y-Y. Ainsi, comme on le verra plus loin, lors de la procédure de dévoilage par rotation de la roue d'environ 90°, on est constamment assuré de ne pas faire fonctionner le capteur potentiométrique 12 dans sa zone morte voisine de l'axe M.

Dans le procédé de mise en oeuvre des dispositifs selon l'invention, on corrige automatiquement les valeurs géométriques obtenues en fonction du défaut de coaxialité de l'axe 2 avec l'axe de la roue et en fonction du voile de la roue.

L'axe 2 ne peut jamais être parfaitement positionné coaxialement à l'axe de la roue, en raison notamment des défauts sur les bords de jantes et des tolérances de fabrication du support se fixant sur la jante comportant l'élément 3.

Pour s'affranchir de ce défaut, on lève la roue du véhicule et on fait tourner la roue en maintenant le boîtier capteur 1 sensiblement horizontal : le boîtier capteur 1 peut être maintenu horizontal lorsque la vis à bouton moleté 4 est desserrée, ce qui provoque la rotation de l'axe 2 à l'intérieur du boîtier maintenu horizontal.

Lors de la rotation de la roue et de l'axe 2 solidaire de celle-ci, le bloc caméra 13 comportant une source lumineuse et un capteur de rayonnement mesure dans le plan horizontal les variations correspondant au voile de la roue, tandis que la carte 10 comportant un inclinomètre 11 corrige ces variations grâce aux mesures dans les plans verticaux. On obtient ainsi une courbe d'allure sinusoïdale appelée voile de la roue. Lorsque l'on repose la roue du véhicule dans une position quelconque, l'information correspondant à la position angulaire de la roue mesurée par le capteur potentiométrique 12 est transmise à la carte de traitement et de calcul 14 qui corrige les valeurs obtenues par les autres capteurs pour calculer les angles de parallélisme et de carrossage correspondant au voile moyen de la roue, alors que la roue elle-même peut se trouver dans une position angulaire différente du voile moyen.

Le procédé selon l'invention est un procédé de type conversationnel comportant les étapes suivantes.

a/ L'écran d'affichage 9 indique à l'opérateur de mettre le support de roue vertical, de fixer rigidement le boîtier 4 maintenu horizontal sur l'axe 2, de déclencher les mesures au moyen des capteurs précités et de mémoriser ces mesures dans des mémoires prévues à cet effet sur la carte électronique de traitement et de calcul 14.

b/ L'écran d'affichage 9 indique à l'opérateur de desserrer le bouton moleté 4 pour permettre une rotation relative entre l'axe 2 et le boîtier 1, de tourner la roue d'environ 90° dans un sens prédéterminé, par exemple à gauche, de déclencher les mesures par les capteurs précités et de mémoriser ces mesures dans les mémoires précitées de la carte électronique 14.

c/ L'écran d'affichage 9 indique à l'opérateur de tourner la roue dans un sens opposé au sens prédéterminé comme mentionné à l'étape b/, par exemple à droite d'environ 180°, (cette position correspond à un décalage de 90° environ par rapport à la position de la roue correspondant à l'étape a/, mais dans le sens opposé au sens de rotation de l'étape b/), de déclencher les mesures et de mémoriser ces mesures dans la carte électronique 14.

La carte électronique 14 est programmée de manière à déterminer grâce à ces trois ensembles de valeurs déterminées respectivement aux étapes a/, b/ et c/ : d'une part la valeur du voile de la roue et d'autre part la valeur des corrections à effectuer lorsque l'on repose la roue dans une position quelconque sur le sol, position voisine d'une des positions d'indexage située nettement en dehors de la zone morte du potentiomètre 12.

Les corrections effectuées grâce à la connaissance de la position angulaire de la roue, de l'inclinaison du boîtier et de la valeur du voile (courbe sinusoïdale) caractéristique de la roue, sont ainsi effectuées en continu, ce qui permet d'effectuer les contrôles géométriques des véhicules de manière particulièrement simple et rapide, du fait que l'opérateur n'est jamais obligé de positionner les boîtiers 1 solidaires des roues de véhicule exactement de niveau pendant les phases de dévoilage et au moment où l'on repose la roue pour mesurer les angles de parallélisme et de carrossage : en effet, le défaut d'horizontalité des boîtiers 1 selon l'invention est automatiquement corrigé grâce à la combinaison et à la correction mutuelles des valeurs ainsi mesurées.

L'invention permet ainsi de remédier aux inconvénients des appareils et procédés de l'art antérieur, dans lesquels il fallait connaître la position angulaire de la roue une fois reposée à la fin du dévoilage. On sait en effet que, notamment sur les roues avant le bras de suspension entraîne lors de la repose de la roue une rotation parasite de la roue d'environ 10° entre le moment de contact du sol avec le pneumatique et la repose complète de la roue et l'application de la charge correspondante sur le sol.

L'invention remédie également aux autres inconvénients de l'art antérieur, résultant du fait que l'opérateur était auparavant obligé de tourner le roue dans des positions extrêmement précises pour effectuer le dévoilage : ces appareils et procédés de l'art antérieur ne pouvaient pas compenser automatiquement la variation de position angulaire de la roue.

Pour mettre en oeuvre l'invention, il suffit en fait de tourner la roue selon les étapes a/ b/ c/ précitées d'un angle qui peut être voisin de 90° à plus ou moins 10° près, la valeur précise de cet angle étant automatiquement fournie par le capteur de position angulaire 12. La carte de traitement électronique 14 programmable définit alors la sinusoïde correspondant au voile en fonction des valeurs réelles des positions angulaires qui lui sont transmises par le capteur 12.

L'invention permet en outre d'effectuer l'ensemble des mesures géométriques du véhicules sans soulever la roue lors de la phase de dévoilage : en effet, il suffit d'entraîner la roue du véhicule en rotation par un tapis roulant ou un rouleau motorisé de type connu pour saisir les mesures permettant les corrections des valeurs géométriques selon les trois étapes a/ b/ et c/ précitées. On peut également envisager une mesure d'ensemble, dans laquelle la voiture circule en étant équipée des dispositifs selon l'invention, de manière à effectuer le dévoilage et les corrections correspondantes des valeurs géométriques simultanément : les trois points de dévoilage correspondant aux rotations de 90° dans le sens horaire et anti horaire des roues par rapport à une position de préférence sont alors pris au vol pendant le déplacement du véhicule.

Pour des véhicules nécessitant un contrôle géométrique de haute qualité, il est possible d'affiner les mesures de voile et les corrections géométriques nécessaires en prenant un nombre de points prédéterminés pour définir plus exactement la courbe sinusoïdale correspondant au voile et fournissant les valeurs de corrections correspondantes.

A cet effet, lorsque l'on saisit des ensembles de mesures correspondant à une position angulaire de la roue ou des roues, on définit la courbe sinusoïdale de voile par exemple par la méthode des moindres carrés en minimisant l'écart de la fonction théorique sinusoïdale recherchée par rapport à l'ensemble des mesures obtenues lors d'un nombre prédéterminé d'étapes de mesures du type précité. Bien entendu, on pourra remplacer la méthode de calcul faisant appel à la technique de minimisation des moindres carrés par toute autre méthode statistique appropriée.

En référence à la figure 5, un boîtier de mesure 13 ou bloc caméra du dispositif selon l'invention est relié à des moyens d'accrochage sur une jante de roue de véhicule à contrôler, lesdits moyens d'accrochage comportant par exemple des griffes ou crampons 52, 53 et un moyen de réglage symétrique en hauteur non représenté.

Le boîtier 13 supporte une source 54 d'émission de rayonnement lumineux 55 dirigé vers un autre boîtier non représenté solidaire d'une autre roue. Du côté opposé à la sortie du rayonnement lumineux 55, le boîtier 13 contient un module électronique 56 de mesure et d'alimentation accessible par démontage d'un capot 57 de protection. Le boîtier présente une conformation 58 d'enveloppe sensiblement parallélépipédique contenant la source 54 constituant un émetteur optique et un espace 59 intérieur adapté à la réception optique d'un rayonnement 60 en provenance de l'autre boîtier 13 précité. L'espace 59 intérieur est étanche aux impuretés et est entièrement fermé par des parois latérales, dont l'une contient un filtre 61 transparent au rayonnement incident 60 situé à l'emplacement d'une fente d'admission du rayonnement lumineux à l'intérieur de l'espace 59.

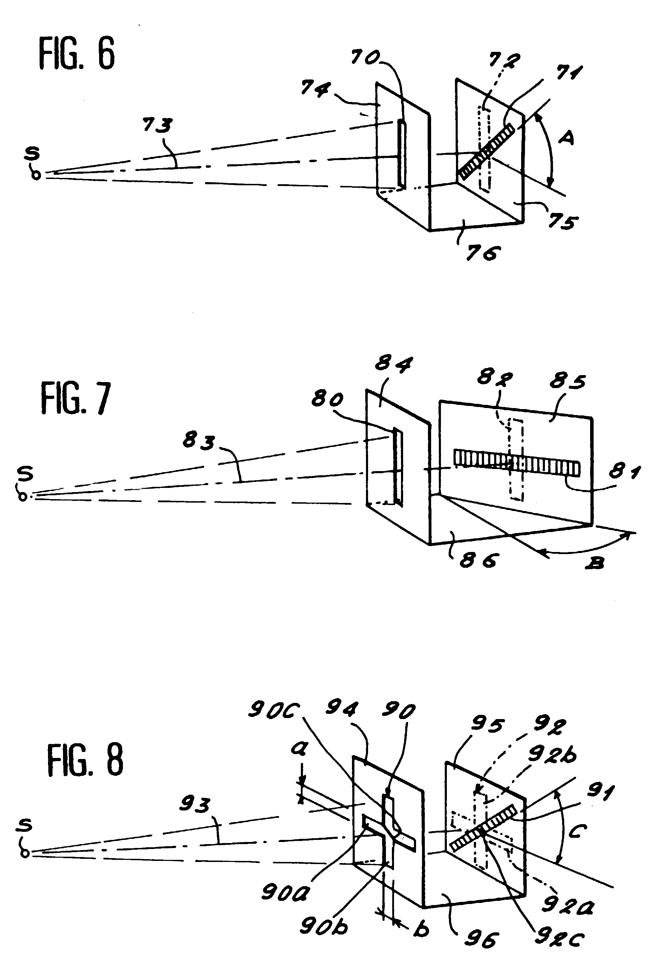

En référence aux figures 5 et 6, un montage optique intérieur à un boîtier 13 de dispositif selon l'invention comporte en regard d'une source S de rayonnement solidaire d'un autre boîtier une fente de définition 70 pour définir l'image 72 de la source S sur le détecteur linéaire 71 sensible au rayonnement de la source S.

Bien entendu, la fente de collimation 70 peut être remplacée par une lentille cylindrique ou tout autre élément optique sans sortir du cadre de la présente invention.

Le détecteur 71 est incliné suivant un angle A avec le plan passant par l'axe longitudinal de la fente 70 et l'axe longitudinal de l'image 72 de la source S sur le détecteur 71. En inclinant ainsi le détecteur dans le plan perpendiculaire à l'axe optique 73 selon un angle A, on constate que la largeur apparente des pixels diminue, ce qui provoque une augmentation de la résolution des pixels ou points du détecteur linéaire 71.

Plus précisément, la largeur apparente des pixels relativement à la fente est multipliée par le cosinus de l'angle d'inclinaison A : la résolution est donc multipliée par l'inverse du cosinus de l'angle A d'inclinaison;

L'angle A est de préférence compris entre 30 et 60 degrés d'angle sexagésimaux ; la résolution est donc dans ce cas augmentée de 15% à 100%.

Ce mode particulier de l'invention permet ainsi, par le simple moyen de l'inclinaison A précitée, d'obtenir une résolution supérieure et ceci à dimensions de boîtier de mesure constantes. Les dispositifs selon l'invention diffèrent des dispositifs connus par l'agencement des boîtiers précités et les modifications correspondantes du logiciel de traitement des données faisant partie de ces dispositifs : la plaque 74 ou structure analogue de support de la fente 70, la plaque 75 ou structure analogue de support de capteur optique CCD qui est sensiblement parallèle à la plaque 74 précitée et la plaque de liaison 76 ou fond de boîtier non représenté sont dans ce cas identiques ou similaires aux plaques et/ou structures des boîtiers connus.

En référence à la figure 7, un autre montage optique intérieur à un boîtier de dispositif selon l'invention comporte également une fente 80 de définition en regard d'une source S de rayonnement solidaire d'un autre boîtier. Un détecteur linéaire optique 81 est disposé de manière à recevoir l'image 82 de la source S collimatée par la fente 80 ou moyen de collimation équivalent.

Selon l'invention, le détecteur linéaire 81 disposé sur le chemin de l'axe optique 83 est disposé selon un angle B avec la direction parallèle à la plaque 84 dans laquelle est ménagée la fente 80. A cet effet, la plaque 85 ou structure analogue de support du capteur optique CCD 81 est montée par rapport à la plaque 86 de liaison solidaire du boîtier de mesure non représenté selon un angle B compris de référence entre 30 et 60 degrés d'angle sexagésimaux : cette disposition entraîne par conséquent une augmentation de résolution comprise entre 15% et 100% par rapport aux dispositions de l'art antérieur.

Dans cette variante de réalisation, le changement de disposition géométrique entraîne, soit un passage à une forme prismatique de boîtier, soit une conservation de forme parallélépipédique et un changement de disposition des modules et composants électroniques placés habituellement au dos de la plaque de support 85.

En référence à la figure 8, un autre montage optique intérieur à un boîtier de dispositif selon l'invention comporte deux fentes de largeur inégale formant une croix 90 de définition sur un capteur optique linéaire 91 d'une image 92 d'une source S de rayonnement solidaire d'un autre boîtier.

La croix 90 de définition comporte une fente sensiblement horizontale 90a de largeur a et une fente sensiblement verticale 90b de largeur b. Pour permettre une meilleure discrimination des images 92a et 92b de la source de rayonnement S et en déduire les déplacements angulaires correspondants respectivement autour d'un axe vertical et horizontal, les largeurs a et b peuvent être différentes l'une de l'autre d'une valeur supérieur ou égale à cinq fois la largeur d'une barrette de capteur CCD : dans le cas d'un capteur linéaire CCD à 2048 points présentant une largeur de barrette de 14 micromètres, les largeurs a et b diffèrent par conséquent de 70 micromètres au moins.

Dans cet exemple, le plan de la fente en croix 90, c'est-à-dire le support 94 et le plan du capteur linéaire 91, c'est-à-dire le support 95 sont sensiblement parallèles entre eux. Le capteur optique linéaire 91 est incliné dans le plan 95 de manière à faire un angle C avec l'image 92a de la fente horizontale 92.

On dispose avantageusement au centre de la croix 90 un fil 90 c ou un réticule, de préférence de manière que la position initiale du chemin optique 93 reliant la source S de rayonnement au centre de son image 92 passe par ce fil ou réticule 90c : le fil 90c ou réticule est incliné de manière que, dans cette position, son ombre 92c vienne obscurcir une ou plusieurs barrettes du capteur linéaire 91.

Cette disposition définit ainsi un repère d'origine correspondant à l'image 92c du fil ou réticule 90c et permet de considérer que la source S de rayonnement donne deux images sur les cellules du capteur optiques séparées par l'image 92c d'origine. Les images ainsi définies dans le plan 95 parallèle à la fente 90 donnent par un calcul simple l'indication de la position de la source S suivant la verticale et l'horizontale et fournissent par un calcul trigonométrique simple les variations angulaires correspondantes.

A titre d'exemple, si l'on désigne par f la distance entre la fente 90 et l'image 92 de la source S de rayonnement, par x le déplacement horizontal par rapport à l'origine et par y le déplacement vertical par rapport à l'origine, les angles H et V de déplacement respectivement autour de la verticale et de déplacement autour de l'horizontale du rayon incident sont donnés par les formules suivantes

$$H = \text{Arctg } (x/f)$$

$$V = \text{Arctg } (y/f)$$

L'invention permet ainsi dans cette utilisation de manière particulièrement économique d'effectuer une mesure dans deux dimensions ou d'obtenir deux valeurs angulaires au moyen d'un seul capteur optique linéaire en supprimant par conséquent les coûteuses cellules matricielles de l'art antérieur.

L'angle C d'inclinaison est de préférence compris entre 30 et 60 degrés d'angle sexagésimaux; une valeur d'angle C égale à 45 degrés donne entièrement satisfaction ; mais il est également possible de définir la valeur de l'angle C d'inclinaison en fonction des résolutions demandées respectivement selon la verticale ou selon l'horizontale.

Il est également possible de prévoir un plan 95 non parallèle à la fente 90, de manière que le capteur linéaire 91 soit disposé avec un angle supplémentaire $B_1$ autour de la verticale, de manière analogue au mode de réalisation de la figure 7 : toutefois, dans ce cas, l'angle $B_1$ est de préférence compris entre 0 et 45 degrés d'angle.

Bien entendu, les fentes décrites en référence aux figures 5 à 8 peuvent être remplacées par des fils ou des peignes opaques, de manière à définir des ombres ou images inverses sur un capteur linéaire 71 ou 81 ou 91, sans sortir du cadre de la présente invention.

L'invention s'étend également au cas de plusieurs fentes parallèles les unes aux autres : cette variante avantageuse non représentée permet en utilisant les dispositions décrites en référence aux figures 5 à 7 de couvrir la plage totale de mesure dont l'étendue est d'environ 25 degrés d'angle au moyen de trois fentes parallèles en obtenant une résolution de 20 secondes d'angle sexagésimales par point du capteur optique linéaire.

Bien entendu, on pourra également augmenter le nombre de fentes parallèles (ou éventuellement perpendiculaires entre elles) de manière à augmenter la plage de mesure.

Ce résultat est obtenu aussi bien dans la disposition analogue à celle de la figure 6 que dans la disposition analogue à celle de la figure 7 ou 8.

Cette variante de l'invention, décrite en référence à des fentes réalisées par découpe de matière ou gravure chimique ou tout autre procédé d'enlèvement de matériau opaque au rayonnement, s'applique bien entendu aux système comportant des fentes qualifiées de "dynamiques" par les spécialistes, réalisées par exemple par commande de l'opacité d'un écran à cristaux liquides pilotable électriquement pour simuler un déplacement d'une fente en opacifiant de manière choisie différents segments de l'écran à cristaux liquides. Pour réaliser ces fentes "dynamiques", il est également possible de déplacer des fentes découpées ou gravées au moyen d'un système motorisé ou de tout autre moyen de déplacement mécanique, piézoélectrique ou équivalent.

Il est avantageux d'utiliser plusieurs fentes parallèles ou une fente dynamique équivalente, car cette disposition permet d'obtenir en plus des angles H et V précités une base de triangulation pour calculer de proche en proche toutes les distances et tous les écarts caractéristiques du véhicule contrôlé, de façon économique au moyen d'un seul capteur linéaire.

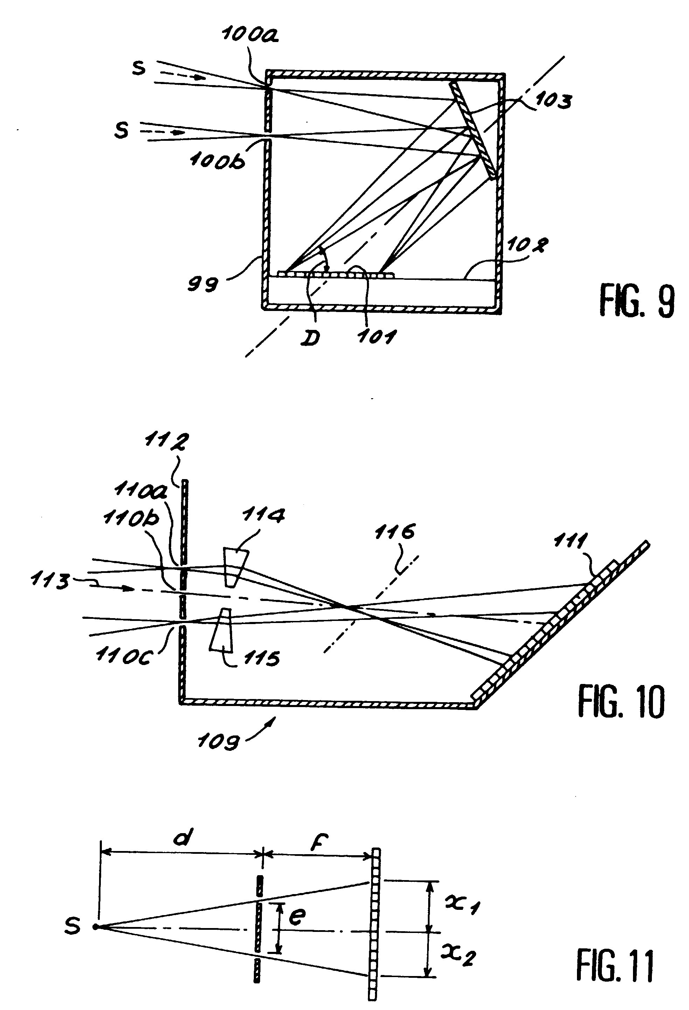

En particulier, la distance d de la source S au plan des fentes de définition s'obtient dans le cas de la figure 11 par résolution de l'équation suivante :

$$\frac{d + f}{d} = \frac{x_1 + x_2}{e},$$

ou e est l'écartement entre les fentes, f la distance entre la fente et l'image, $x_1$ et $x_2$ les distances des images à l'axe optique du capteur.

En référence à la figure 9, un boîtier 99 schématisé en coupe par un plan vertical comporte en face avant deux fentes 100a, 100b parallèles et transparentes à un rayonnement en provenance d'une source S non représentée, de manière à définir une image de la source S sur un capteur optique linéaire 101 sensiblement plan et orienté selon un angle D par rapport à l'axe optique du rayonnement incident.

L'angle D est de préférence compris entre 30 et 60 degrés d'angle sexégésimaux ; dans l'exemple représenté, l'angle D est sensiblement égal à 45 degrés.

L'invention est similaire dans cette variante aux variantes décrites en référence aux figures 5 à 8 ; toutefois, dans le but de minimiser le volume et les dimensions extérieures du boîtier 99, on prévoit dans cet exemple de replier une fois le faisceau lumineux incident avant d'éclairer le capteur optique 101 monté sur le support 102.

Le repli du faisceau optique résulte de l'installation d'un miroir plan 103 ou organe réfléchissant équivalent qui renvoie et concentre le faisceau lumineux incident sur le capteur optique linéaire 101 : à cet effet, le miroir plan 103 ou analogue est incliné par rapport à la direction du faisceau incident d'un angle D/2, dans et exemple d'un angle de 22½ degrés d'angle.

Ce quatrième mode de réalisation permet une fabrication particulièrement compacte : en effet, à titre d'exemple, la dimension du côté de la section carrée du boîtier est dans cet exemple inférieure à 60mm.

En référence à la figure 10, un boîtier 109 comporte trois fentes 110a, 110b, 110c disposées sensiblement parallèlement et pratiquées dans une paroi 112.

Chaque fente 110a ou 110b ou 110c est destinée à couvrir une plage de mesure angulaire prédéterminée, de manière à fournir une image d'une source de rayonnement lumineux non représenté sur un détecteur optique linéaire 111.

Lorsque l'on désire mesurer une plage angulaire relativement étendue de l'ordre de 30 degrés d'angle, il est nécessaire de prévoir une distance entre fentes relativement importante. Dans ce cas, l'écartement entre les fentes externes 110a et 110c et la fente médiane 110b a pour conséquence une variation notable de la distance de la source de rayonnement à chacune des fentes 110a et 110c, ce qui entraîne une variation de l'angle mesuré en fonction de la distance à la source.

Dans cette variante de réalisation, on prévoit de dévier les faisceaux optiques passant par les fentes externes 110a et 110c, de manière à pouvoir rapprocher les fentes 110a et 110c de la fente 110b en conservant la même plage angulaire de mesure. Cette disposition a pour avantage de pouvoir diminuer la taille du boîtier.

Pour dévier les faisceaux optiques vers l'axe 113 du système optique, on prévoit de monter deux prismes 114 et 115 de type connu à l'arrière des fentes 110a et 110c.

A titre indicatif, un montage optique, dans lequel les fentes 110 sont espacées l'une de l'autre d'une distance inférieure à 3mm et dans lequel les prismes déviateurs 114 et 115 dévient les faisceaux optiques externes d'une valeur angulaire d'environ 9½ degrés d'angle, donne entièrement satisfaction.

Sur la figure 10, le capteur linéaire 111 est monté dans un plan faisant un angle avec la direction parallèle au plan 112 ; l'invention n'est pas limitée à cette disposition de capteur mais couvre également toutes les dispositions de capteur combinant la figure 10 avec l'une quelconque des figures 5 à 9 ou plusieurs d'entre elles.

En particulier, si l'on désire obtenir un boîtier de dispositif selon l'invention particulièrement compact, on prévoit de monter un miroir 116 symbolisé en traits pointillés en aval des prismes 114 et 115 pour obtenir une disposition analogue à celle de la figure 9.

Les boîtiers de mesure selon l'invention décrits en référence à un capteur optique linéaire du genre CCD (cellule à diodes à couplage de charges) peuvent comporter tout autre type de capteur optique linéaire ; par exemple à des capteurs appelés PSD (détecteurs sensibles à la position), par l'homme de l'art.

## Revendications

1. Dispositif pour le contrôle géométrique de véhicule, du type comportant un boîtier (1) avec un axe (2) prisonnier dépassant du boîtier, ledit axe (2) monté à rotation dans le boîtier (1) s'engageant par son extrémité dépassante dans et étant fixé à un élément de support (3) solidaire d'une roue du véhicule à contrôler, ledit boîtier (1) contenant un moyen ou boîtier de mesure (13) d'orientation de la roue dans le plan horizontal dit "bloc caméra", un potentiomètre (12) de suivi de l'angle de roue, des moyens (11) de mesure d'inclinaisons dans un plan vertical perpendiculaire et dans un plan vertical parallèle à la roue montés ou connectés sur une carte électronique (10); ledit bloc caméra (13), ledit potentiomètre (12) et lesdits moyens (11) montés ou connectés sur une carte électronique (10) émettant des signaux électriques représentatifs d'indications corrélées avec des paramètres physiques à détecter en vue du contrôle géométrique d'un véhicule.

2. Dispositif pour le contrôle géométrique de véhicule selon la revendication 1, caractérisé en ce que l'axe (2) porte deux conformations (22, 23) parallèles et espacées, dont la première (22) vient en appui à un emplacement de référence de l'élément de support (3) et dont la deuxième (23) vient en appui à un emplacement de référence du boîtier (1), de manière à fournir un montage reproductible et invariable du boîtier (1) sur le support (3) par l'intermédiaire de l'axe (2) après blocage relatif entre le boîtier (1), l'axe (2) et le support (3).

3. Dispositif selon la revendication 1, caractérisé en ce que le dispositif comporte une carte (14) électronique de traitement et de calcul de signaux en provenance de moyens de mesure de la position angulaire de la roue (12), de mesure d'inclinaisons dans un plan vertical perpendiculaire et dans un plan vertical parallèle à la roue (11) et de mesure d'orientation (13) de la roue dans le plan horizontal, ainsi qu'un panneau d'affichage (7) conversationnel apte à guider l'opérateur selon les instructions émises par ladite carte électronique (14) de traitement et de calcul.

4. Dispositif pour le contrôle de la géométrie des véhicules selon la revendication 1, caractérisé en ce que ledit boîtier (13) de mesure d'orientation de la roue dans le plan horizontal comporte au moins une fente transparente au rayonnement lumineux, une lentille cylindrique ou autre moyen de définition d'image équivalent, provenant d'une source externe et au moins un détecteur optique linéaire disposé en aval de la fente dans le sens incident du rayonnement lumineux pour détecter l'image de la source formée par la fente, et en ce que le détecteur (71, 81, 91, 101, 111) est incliné suivant un angle (A, B, C, D) aigu avec le plan passant par l'axe longitudinal de la fente (70) et l'axe longitudinal de l'image (72) de la source S sur le détecteur (71).

5. Dispositif selon la revendication 4, caractérisé en ce que ledit angle aigu (A, B, C, D) est de préférence compris entre 30 et 60 degrés d'angle.

6. Dispositif selon la revendication 4 ou 5, caractérisé en ce que le détecteur (71, 111) est situé dans un plan parallèle (75) au plan (74, 94) de la fente (70, 90) et fait avec la direction perpendiculaire à un axe longitudinal de la fente (70, 90) un angle aigu (A).

7. Dispositif selon la revendication 4 ou 5, caractérisé en ce que le détecteur (81, 101, 111) est situé dans un plan (85, 95, 102) qui fait un angle aigu (B, D) avec l'axe optique (83) du faisceau incident .

8. Dispositif selon la revendication 4 ou 5, caractérisé en ce que le dispositif comporte au moins un miroir (103) de repli du faisceau incident, de manière à minimiser le volume et les dimensions du boîtier (99).

9. Dispositif selon la revendication 4 ou 5, caractérisé en ce que le dispositif comporte au moins un boîtier (99, 109) qui comporte plusieurs fentes (100a, 100b ; 110a, 110b, 110c) ou organes de définition d'image.

10. Dispositif selon la revendication 9, caractérisé en ce que ledit boîtier (109) comporte au moins un prisme (114 ou 115) de déviation du faisceau lumineux, de manière à minimiser l'écartement entre fentes (110a, 110b, 110c) ou organes de définition d'image.

11. Dispositif selon la revendication 4 ou 5, caractérisé en ce que la fente (90) est en forme de croix comportant deux fentes perpendiculaires (90a, 90b) ou organes de définition d'image perpendiculaires.

12. Dispositif selon la revendication 11, caractérisé en ce que la croix (90) supporte au voisinage de l'axe optique (93) un fil ou un réticule (90c) apte à se projeter sur une barrette du détecteur optique linéaire.

13. Dispositif selon la revendication 4 ou 5, caractérisé en ce que : au moins une fente est remplacée par un fil ou un peigne opaque, de manière à définir une image inverse sur le capteur optique linéaire (71, 81, 91, 101, 111).

14. Dispositif selon la revendication 4 ou 5 comportant plusieurs fentes, caractérisé en ce que la largeur d'une fente donnée est différente de la largeur d'une autre fente.

15. Dispositif selon la revendication 4 ou 5, caractérisé en ce qu'une fente est une fente dynamique.

16. Dispositif selon la revendication 1, caractérisé en ce que le boîtier (1) porte une source (4) de rayonnement lumineux qui est une lampe du type tube à gaz produisant des éclairs lumineux entre deux électrodes, éclairs d'une durée prédéterminée à des intervalles de temps prédéterminés.

17. Dispositif selon la revendication 1, caractérisé en ce que le moyen (12) de mesure de la position angulaire de la roue est monté directement coaxialement audit axe (2) dépassant du boîtier (1).

18. Dispositif selon la revendication 17, caractérisé en ce que le moyen (12) de mesure de la position angulaire de la roue comporte une zone angulaire morte (M).

**19.** Dispositif selon la revendication 1 ou 2, caractérisé en ce que l'axe (2) dépassant du boîtier (1) porte un moyen d'indexation (24) du côté de l'extrémité s'engageant dans l'élément (3) de support, de manière à monter l'axe (2) et le boîtier (1) maintenu horizontal dans une position angulaire préréglée.

**20.** Dispositif selon la revendication 17, caractérisé en ce que le moyen (12) de mesure de la position angulaire de la roue est un capteur potentiométrique.

**21.** Dispositif selon la revendication 20, caractérisé en ce que le capteur potentiométrique (11) est du type à piste sérigraphiée (40).

**22.** Dispositif selon la revendication 3, caractérisé en ce que les moyens de mesure (11) d'inclinaison dans les plans verticaux respectivement parallèle et perpendiculaire à la roue comportent un inclinomètre (10) du type à goutte de liquide conducteur.

**23.** Procédé d'utilisation d'un dispositif de contrôle géométrique selon l'une quelconque des revendications 1 à 22, caractérisé en ce que le procédé est du type conversationnel entre un opérateur et un écran d'affichage (9) recevant ses indications d'une carte de traitement et de calcul (14) comportant des mémoires et des microprocesseurs programmables.

**24.** Procédé selon la revendication 23, comportant au moins les étapes suivantes :

a/ L'écran d'affichage (9) indique à l'opérateur de mettre le support de roue vertical, de fixer rigidement le boîtier (4) maintenu approximativement horizontal sur l'axe (2), de déclencher les mesures au moyen des capteurs précités et de mémoriser ces mesures dans des mémoires prévues à cet effet sur la carte électronique de traitement et de calcul (14).

b/ L'écran d'affichage (9) indique à l'opérateur de desserrer le bouton moleté (4) pour permettre une rotation relative entre l'axe (2) et le boîtier (1), de tourner la roue d'un premier angle dans un sens prédéterminé, par exemple à gauche, de déclencher les mesures par les capteurs précités et de mémoriser ces mesures dans les mémoires précitées de la carte électronique (14).

c/ L'écran d'affichage (9) indique à l'opérateur de tourner la roue dans un autre sens prédéterminé, par exemple à droite d'un deuxième angle différent dudit premier angle, de déclencher les mesures et de mémoriser ces mesures dans la carte électronique (14).

**25.** Procédé selon la revendication 23, caractérisé en ce que l'opérateur tourne la roue d'une étape (a/, ou b/) à l'étape suivante (b/, ou c/) avec une précision angulaire de l'ordre de 30 degrés angulaires sexagésimaux.

**26.** Procédé selon la revendication 23, caractérisé en ce que la roue du véhicule est entraînée en rotation par un moyen motorisé, du type tapis roulant ou rouleau d'entraînement motorisé.

**27.** Procédé selon la revendication 23, caractérisé en ce que le véhicule à contrôler est équipé de dispositifs selon l'invention, puis circule de manière à effectuer le dévoilage et les corrections des valeurs géométriques pendant le roulage du véhicule.

**28.** Procédé selon la revendication 23, caractérisé en ce qu'on ne déclenche pas les mesures à l'étape a/ et que l'on tourne la roue de véhicule d'un angle choisi avant de déclencher les mesures.

**29.** Procédé d'utilisation d'un dispositif suivant la revendication 23, caractérisé en ce que les informations correspondants à l'inclinaison dans un plan vertical parallèle à la roue sont utilisées pour compenser les mesures en fonction de l'écart de la position du boîtier (1) par rapport à l'horizontale.

**30.** Procédé selon la revendication 23, dans lequel l'écran d'affichage (9) est remplacé par un dispositif d'affichage extérieur au boîtier (1) et en communication avec la boîtier (1) par l'intermédiaire d'un bloc de connexion (15).

**31.** Procédé selon la revendication 23, caractérisé en ce que des moyens conversationnels (8) et de traitement (14) donnent des indications en temps réel d'inclinaison du boîtier (1) dans le plan parallèle à la roue.

**Patentansprüche**

**1.** Vorrichtung zur geometrischen Kontrolle eines Fahrzeugs, aufweisend ein Gehäuse (1) mit einer darin aufgenommenen Achse (2), die über das Gehäuse hinaussteht, wobei die Achse (2) in dem Gehäuse (1) drehbeweglich angebracht ist und mit seinem überstehenden Ende in ein Trageelement (3) eingreift und mit diesem fest verbunden ist, das mit einem Rad eines zu kontrollierenden Fahrzeugs fest verbunden ist, wobei das Gehäuse (1) eine Einrichtung oder eine Box (13) zur Messung der Ausrichtung des Rads in der horizontalen Ebene enthält, die „Blockkamera" genannt wird, ein Potentiometer (12) des Drehwinkels des Rads, eine Einrichtung (11) zur Messung der Neigungen in einer Vertikalebene senkrecht zu dem Rad und in einer Vertikalebene parallel zu dem Rad, wobei die Einrichtung an einer Elektronikkarte (10) angebracht oder mit dieser verbunden ist, wobei die genannte Blockkamera (13), das Potentiometer (12) und die Einrichtung (11) auf einer Elektronikkarte (10) angebracht oder mit dieser verbunden sind, die elektrische Signale ausgibt, die Angaben wiedergeben, die mit den physikalischen Parametern in Bezug stehen, die zur geometrischen Kontrolle eines Fahrzeugs erfaßt werden.

2.    Vorrichtung zur geometrischen Kontrolle eines Fahrzeugs (1),
dadurch **gekennzeichnet,**
daß die Achse (2) zwei parallele und voneinander beabstandete Formgebungen (22, 23) trägt, von denen die erste (22) an einer Referenzstelle des Trageelement (3) anschlägt und die zweite (23) an einer Referenzstelle des Gehäuses (1) anschlägt, derart, daß eine reproduzierbare und unveränderbare Anbringung des Gehäuses (1) auf dem Träger (3) mittels der Achse (2) nach der Relativblockierung des Gehäuses (1), der Achse (2) und des Trägers (3) zueinander geschaffen wird.

3.    Vorrichtung nach Anspruch 1,
dadurch **gekennzeichnet**,
daß die Vorrichtung eine Elektronikkarte (14) zur Verarbeitung und Berechnung der Signale aufweist, die von der Meßeinrichtung zur Messung des Drehwinkels des Rads (12), zur Messung der Neigungen in einer Vertikalebene senkrecht zu dem Rad (11) und einer Vertikalebene parallel dazu, sowie zur Messung der Winkelstellung (13) des Rads in der Horizontalebene sowie eine interaktive Anzeigeeinrichtung (7) zur Führung des Bedieners gemäß den Anweisungen aufweist, die durch die Elektronikkarte (14) zur Verarbeitung und Berechnung ausgegeben werden.

4.    Vorrichtung zur Kontrolle der Geometrie von Fahrzeugen nach Anspruch 1,
dadurch **gekennzeichnet,**
daß die Box (13) zur Messung der Winkelkomponente des Rads in der Horizontalebene wenigstens einen für eine Lichtbestrahlung von einer externen Quelle durchlässigen Schlitz, eine Zylinderlinse oder eine andere äquivalente abbildende Einrichtung, und wenigstens einen linearischen optischen Detektor aufweist, der strahlabwärts des Schlitzes in der Einfallsrichtung der Lichtstrahlen zur Erfassung des Bilds der Quelle angeordnet ist, das durch den Schlitz gebildet wird, und dadurch, daß der Detektor (71, 81, 91, 101, 111) in einem spitzen Winkel zu der Ebene geneigt ist, die sich auf der Längsachse des Schlitzes (70) und auf der Längsachse des Bildes (72) der Quelle S auf dem Detektor (71) stützt.

5.    Vorrichtung nach Anspruch 4,
dadurch **gekennzeichnet,**
daß der spitze Winkel (A, B, C, D) zwischen 30 und 60 Grad beträgt.

6.    Vorrichtung nach Anspruch 4 oder 5,
dadurch **gekennzeichnet,**
daß der Detektor 71, 111) in einer Ebene (75) parallel zu der Ebene (74, 94) des Schlitzes (70, 90) liegt und mit der Richtung senkrecht zu einer Längsachse des Schlitzes (70, 90) einen spitzen Winkel (A) bildet.

7.    Vorrichtung nach Anspruch 4 oder 5,
dadurch **gekennzeichnet,**
daß der Detektor (81, 101, 111) in einer Ebene (85, 95, 102) liegt, die einen spitzen Winkel (B, D) mit der optischen Achse (83) des einfallenden Lichtbündels bildet.

8.    Vorrichtung nach Anspruch 4 oder 5,
dadurch **gekennzeichnet,**
daß die Vorrichtung wenigstens einen Umlenkspiegel (103) für den einfallenden Lichtstrahl aufweist, so daß das Volumen und die Abmessungen der Box (99) verringert werden.

9.    Vorrichtung nach Anspruch 4 oder 5,
dadurch **gekennzeichnet**,
daß die Vorrichtung wenigstens eine Box (99, 109) aufweist, das mehrere Schlitze (100a, 100b; 110a, 110b, 110c) oder abbildende Elemente aufweist.

10.   Vorrichtung nach Anspruch 9,
dadurch **gekennzeichnet,**
daß die Box (109) wenigstens ein Prisma (114 oder 115) zur Umlenkung des Lichtstrahls aufweist, so daß der Abstand zwischen den Schlitzen (110a, 110b, 110c) oder den abbildenden Elementen verringert wird.

11.   Vorrichtung nach Anspruch 4 oder 5,
dadurch **gekennzeichnet,**
daß der Schlitz (90) kreuzförmig ist und zwei zueinander senkrechte Schlitze (90a, 90b) oder zueinander senkrechte abbildende Elemente aufweist.

12.   Vorrichtung nach Anspruch 11,
dadurch **gekennzeichnet,**
daß das Kreuz (90) in der Nähe der optischen Achse (93) einen Faden oder ein Reticle (90c) aufweist, das auf einen Steg des linearen optischen Detektors projiziert werden kann.

**13.** Vorrichtung nach Anspruch 4 oder 5;
dadurch **gekennzeichnet,**
daß wenigstens ein Schlitz durch einen Faden oder einen lichtdurchlässigen Kamm ersetzt ist, so daß auf dem linearen optischen Detektor (71, 81, 91, 101, 111) ein invertiertes Bild abgebildet wird.

**14.** Vorrichtung nach Anspruch 4 oder 5 mit mehreren Schlitzen,
dadurch **gekennzeichnet,**
daß die Breite eines bestimmten Schlitzes von der Breite eines anderen Schlitzes verschieden ist.

**15.** Vorrichtung nach Anspruch 4 oder 5;
dadurch **gekennzeichnet,**
daß ein Schlitz ein dynamischer Schlitz ist.

**16.** Vorrichtung nach Anspruch 1,
dadurch **gekennzeichnet,**
daß das Gehäuse (1) eine Lichtstrahlenquelle (4) trägt, die eine Lampe des Gasröhrentyps ist, die lichterzeugende Entladungen zwischen zwei Elektroden erzeugt, wobei die lichterzeugenden Entladungen eine vorbestimmte Dauer in Intervallen einer vorbestimmten Zeitdauer aufweisen.

**17.** Vorrichtung nach Anspruch 1,
dadurch **gekennzeichnet,**
daß die Einrichtung (12) zur Messung des Drehwinkels des Rades direkt koaxial an der Achse (2) angebracht ist, die über das Gehäuse (1) hinaussteht.

**18.** Vorrichtung nach Anspruch 17,
dadurch **gekennzeichnet,**
daß die Einrichtung (12) zur Messung des Drehwinkels des Rads einen blinden Winkelbereich (M) aufweist.

**19.** Vorrichtung nach Anspruch 1 oder 2,
dadurch **gekennzeichnet,**
daß die Achse (2), die über das Gehäuse (1) hinaussteht, auf der Seite des Endes, das in das Halteelement (3) eingreift, eine Indexeinrichtung (24) trägt, so daß die Achse (2) und das Gehäuse (1), das horizontal gehalten wird, in einer vorbestimmten Winkelposition angebracht werden.

**20.** Vorrichtung nach Anspruch 14,
dadurch **gekennzeichnet,**
daß die Einrichtung (12) zur Messung der Winkelposition des Rads ein Potentiometer-Aufnehmer ist.

**21.** Vorrichtung nach Anspruch 20,
dadurch **gekennzeichnet,**
daß der Potentiometer-Aufnehmer (11) vom Siebdruckbahnen-Typ (40) ist.

**22.** Vorrichtung nach Anspruch 3,
dadurch **gekennzeichnet,**
daß die Einrichtung (11) zur Messung der Neigung in den Vertikalebenen parallel bzw. senkrecht zum Rad einen Neigungsmesser (10) des Typs aufweisen, der einen leitfähigen Flüssigkeitstropfen aufweist.

**23.** Verfahren der Verwendung einer Vorrichtung zur geometrischen Kontrolle nach einem der Ansprüche 1 bis 22,
dadurch **gekennzeichnet,**
daß das Verfahren interaktiv zwischen einem Bediener und einem Anzeigebildschirm (9) ausgeführt wird, der seine Befehle an einer Bearbeitungs- und Berechnungskarte (14) erhält, die programmierbare Speicher und Mikroprozessoren aufweist.

**24.** Verfahren nach Anspruch 23, gekennzeichnet wenigstens durch die folgenden Schritte:

a) der Anzeigebildschirm (9) weist den Bediener an, die Radhalterung vertikal zu halten, das Gehäuse (4) im wesentlichen horizontal auf der Achse (2) zu halten und fest anzubringen, die Messungen mittels der genannten Aufnehmer auszulösen und diese Messungen in dem dazu vorgesehenen Speichern auf der elektronischen Verarbeitungsund Berechnungskarte (14) zu speichern.
b) Der Anzeigebildschirm (9) weist den Bediener an, den gerändelten Knopf (4) zu lösen, um eine relative Drehung zwischen Achse (2) und dem Gehäuse (1) zu ermöglichen, das Rad in einem ersten Winkel in einer vorbestimmten Richtung, beispielsweise nach links, zu drehen, die Messungen durch die genannten Aufnehmer aufzulösen und diese Messungen in den genannten Speichern der Elektronikkarte (14) zu speichern,
c) der Anzeigebildschirm (9) weist den Bediener an, das Rad in eine andere vorbestimmte Richtung, beispielsweise nach rechts, in einen zweiten Winkel unterschiedlich zu dem genannten ersten Winkel zu drehen, die Messungen auszulösen und die Messungen in der Elektronikkarte (14) zu speichern.

**25.** Verfahren nach Anspruch 23,
dadurch **gekennzeichnet,**
daß der Bediener das Rad von einem Schritt (a oder b) zu dem folgenden Schritt (b oder c) mit einer Winkelgenauigkeit in der Größenordnung von 30 Grad dreht.

**26.** Verfahren nach Anspruch 23,
dadurch **gekennzeichnet,**
daß das Fahrzeugrad durch eine Motoreinrichtung in der Art eines Laufbands oder einer motorgetriebenen Walze angetrieben wird.

27. Verfahren nach Anspruch 23,
    dadurch **gekennzeichnet,**
    daß das zu kontrollierende Fahrzeug mit der erfindungsgemäßen Vorrichtung ausgestattet wird, und dann bewegt wird, um die Felgenschlagkompensation und die Korrekturen der Geometriewerte während der Bewegung des Fahrzeugs auszuführen.

28. Verfahren nach Anspruch 23,
    dadurch **gekennzeichnet,**
    daß in dem Schritt a die Messungen nicht ausgelöst werden und das Fahrzeugrad vor dem Auslösen der Messungen in einem vorbestimmten Winkel gedreht wird.

29. Verfahren der Verwendung einer Vorrichtung gemäß Anspruch 23,
    dadurch **gekennzeichnet,**
    daß die Informationen hinsichtlich der Neigung in einer Vertikalebene parallel zu dem Rad zur Kompensierung der Messungen abhängig von dem Abstand der Position des Gehäuses (1) bezüglich der Horizontalen verwendet werden.

30. Verfahren nach Anspruch 23, bei dem der Anzeigebildschirm (9) durch eine äußere Anzeigevorrichtung des Gehäuses (1) ersetzt wird, die mit dem Gehäuse (1) mittels eines Verbindungsblocks (15) kommuniziert.

31. Verfahren nach Anspruch 23,
    dadurch **gekennzeichnet**,
    daß die Interaktiv- (8) und Verarbeitungseinrichtungen (14) Angaben hinsichtlich der Neigung des Gehäuses (1) in der Ebene parallel zum Rad in Echtzeit geben.

## Claims

1. Device for the geometric checking of a vehicle, of the type comprising a casing (1) with a captive spindle (2) projecting from the casing, said spindle (2) mounted to rotate in the casing (1) engaging by its projecting end in and being fixed to a support member (3) secured to a wheel of the vehicle to be checked, said casing (1) containing means or a unit (13) for measuring the orientation of the wheel in the horizontal plane, a so-called "camera unit", a potentiometer (12) for tracking the wheel angle, means (11) for measuring inclinations in a vertical plane perpendicular to and in a vertical plane parallel to the wheel mounted or connected on an electronic board (10); said camera unit (13), said potentiometer (12) and said means (11) mounted or connected on an electronic board (10) emitting electrical signals representative of information correlated with physical parameters to be detected for effecting the geometric checking of a vehicle.

2. Device for the geometric checking of a vehicle according to Claim 1, characterised in that the spindle (2) comprises two structures (22, 23) which are parallel and spaced apart, whereof the first (22) comes to abut on a reference location of the support member (3) and whereof the second (23) comes to abut on a reference location of the casing (1), in order to provide reproducible and invariable mounting of the casing (1) on the support (3) through the intermediary of the spindle (2) after relative locking between the casing (1), the spindle (2) and the support (3).

3. Device according to Claim 1, characterised in that the device comprises an electronic board (14) for processing and calculating signals coming from the means for measuring the angular position of the wheel (12), for measuring inclinations in a vertical plane perpendicular to and in a vertical plane parallel to the wheel (11) and for measuring orientation (13) of the wheel in the horizontal plane, as well as a conversational display panel (7) able to guide the operator according to the instructions emitted by said electronic board (14) for processing and calculation.

4. Device for checking the geometry of vehicles according to Claim 1, characterised in that said casing (13) for measuring the orientation of the wheel in the horizontal plane comprises at least one slot transparent to light rays, a cylindrical lens or other equivalent means for defining an image, coming from an external source and at least one linear optical detector disposed downstream of the slot in the incident direction of the light rays in order to detect the image from the source formed by the slot, and in that the detector (71, 81, 91, 101, 111) is inclined at an acute angle (A, B, C, D) with the plane passing through the longitudinal axis of the slot (70) and the longitudinal axis of the image (72) from the source (S) on the detector (71).

5. Device according to Claim 4, characterised in that said acute angle (A, B, C, D) is preferably comprised between 30 and 60°.

6. Device according to Claim 4 or 5, characterised in that the detector (71, 111) is situated in a plane (75) parallel to the plane (74, 94) of the slot (70, 90) and forms an acute angle (A) with the direction perpendicular to a longitudinal axis of the slot (70, 90).

7. Device according to Claim 4 or 5, characterised in that the detector (81, 101, 111) is situated in a plane (85, 95, 102) which forms an acute angle (B, D) with the optical axis (83) of the incident beam.

8. Device according to Claim 4 or 5, characterised in that the device comprises at least one mirror (103) for bending the incident beam, in order to minimize the volume and the dimensions of the casing (99).

9. Device according to Claim 4 or 5, characterised in that the device comprises at least one casing (99, 109) which comprises several slots (100a, 100b; 110a, 110b, 110c) or means for defining an image.

10. Device according to Claim 9, characterised in that said casing (109) comprises at least one prism (114, 115) for the deviation of the light beam, in order to minimize the spacing between slots (110a, 110b, 110c) or means for defining an image.

11. Device according to Claim 4 or 5, characterised in that the slot (90) is in the shape of a cross comprising two perpendicular slots (90a, 90b) or perpendicular means for defining an image.

12. Device according to Claim 11, characterised in that in the vicinity of the optical axis (93), the cross (90) supports a wire or cross-wires (90c) able to be projected onto a bar of the linear optical detector.

13. Device according to Claim 4 or 5, characterised in that: at least one slot is replaced by a wire or an opaque comb, in order to define a reverse image on the linear optical detector (71, 81, 91, 101, 111).

14. Device according to Claim 4 or 5, comprising several slots, characterised in that the width of a given slot is different from the width of another slot.

15. Device according to Claim 4 or 5, characterised in that one slot is a dynamic slot.

16. Device according to Claim 1, characterised in that the casing (1) comprises a source (4) of light rays, which is a lamp of the type comprising a gas tube producing flashes of light between two electrodes, which flashes are of a predetermined duration at predetermined intervals of time.

17. Device according to Claim 1, characterised in that the means (12) for measuring the angular position of the wheel are mounted directly coaxially to said spindle (2) projecting from the casing (1).

18. Device according to Claim 17, characterised in that the means (12) for measuring the angular position of the wheel comprise a dead angular zone (M).

19. Device according to Claim 1 or 2, characterised in that the spindle (2) projecting from the casing (1) comprises indexing means (24) on the side of the end engaging in the support member (3), in order to mount the spindle (2) and the casing (1) kept horizontal in a pre-adjusted angular position.

20. Device according to Claim 17, characterised in that the means (12) for measuring the angular position of the wheel is a potentiometric detector.

21. Device according to Claim 20, characterised in that the potentiometric detector (11) is of the type having a screenprinted track (40).

22. Device according to Claim 3, characterised in that the means (11) for measuring inclination in the vertical planes respectively parallel to and perpendicular to the wheel comprise an inclinometer (10) of the type comprising a drop of conducting liquid.

23. Method for using a device for geometric checking according to any one of Claims 1 to 22, characterised in that the method is of the conversational type between an operator and a display screen (9) receiving information from a board (14) for processing and calculation, comprising programmable memories and microprocessors.

24. Method according to Claim 23, comprising at least the following stages:

a/ the display screen (9) tells the operator to place the wheel support vertically, to rigidly fix the casing (4) kept approximately horizontal on the spindle (2), to initiate the measurements by means of the aforesaid detectors and to store these measurements in memories provided for this purpose on the electronic processing and calculation board (14).

b/ the display screen (9) tells the operator to loosen the knurled knob (4) in order to allow a relative rotation between the spindle (2) and the casing (1), to rotate the wheel by a first angle in a predetermined direction, for example to the left, to initiate the measurements by the aforesaid detectors and to store these measurements in the aforesaid memories of the electronic board (14).

c/ the display screen (9) tells the operator to rotate the wheel in another predetermined direction, for example to the right by a second angle different from said first angle, to initiate the measurements and to store these measurements in the electronic board (14).

25. Method according to Claim 23, characterised in that the operator rotates the wheel from stage (a/ or b/) to the following stage (b/ or c/) with an angular precision of the order of 30 sexagesimal angular degrees.

26. Method according to Claim 23, characterised in that the wheel of the vehicle is set in rotation by motorised means, of the type comprising a closed-loop belt or motorised drive roller.

27. Method according to Claim 23, characterised in that the vehicle to be checked is equipped with devices according to the invention, then travels in order to carry out the run-out compensation and the corrections of the geometric values during the travel of the vehicle.

28. Method according to Claim 23, characterised in that the measurements are not initiated at the stage a/ and that the wheel of the vehicle is rotated by a chosen angle before initiating the measurements.

29. Method for the use of a device according to Claim 23, characterised in that the information corresponding to the inclination in a vertical plane parallel to the wheel is used to compensate for the measurements as a function of the deviation of the position of the casing (1) with respect to the horizontal.

30. Method according to Claim 23, in which the display screen (9) is replaced by a display device outside the casing (1) and connected to the casing (1) through the intermediary of a connection unit (15).

31. Method according to Claim 23, characterised in that conversational means (8) and processing means (14) give real time information about the inclination of the casing (1) in the plane parallel to the wheel.

FIG.1

FIG. 2

FIG. 3

FIG. 4

FIG. 5

EP 0 647 829 B1

FIG. 6

FIG. 7

FIG. 8

FIG. 9

FIG. 10

FIG. 11